# EUROPEAN PATENT SPECIFICATION

(11) **EP 2 605 208 B1**
(45) Date of publication and mention of the grant of the patent: **11.02.2015**
(21) Application number: 12195921.7
(22) Date of filing: 06.12.2012
(51) Int. Cl.: G06Q 30/06, H04M 3/42

(54) **Approach for arbitrating subscription conflicts in package-based subscriptions**
Ansatz zur Arbitrierung von Subskriptionskonflikten in paketbasierten Subskriptionen
Approche pour arbitrer des conflits d'abonnement dans les abonnements à base d'emballage

(30) Priority: 16.12.2011 US 201113328829
(43) Date of publication of application: 19.06.2013
(73) Proprietor: Ricoh Company, Ltd., Tokyo 143-8555 (JP)
(72) Inventor: Nuggehalli, Jayasimha, Cupertino, CA California 95014 (US); Hong, Jiang, Cupertino, CA California 95014 (US); Luo, Guiluan, Cupertino, CA California 95014 (US); Lu, Zhenyu, Cupertino, CA California 95014 (US); Sharma, Deeksha, Cupertino, CA California 95014 (US)
(74) Representative: Maury, Richard Philip

(56) References cited:
- WO-A1-2009/018277
- US-A1- 2003 191 657
- US-A1- 2011 171 938

## Description

### FIELD OF THE INVENTION

The present invention relates to managing subscriptions for packages of applications that implement a plurality of services.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Many business organizations use multi-functional peripherals (MFPs) to process documents. MFPs are devices that provide multiple functions to users, such as printing, scanning, copying and faxing. There now exists a multitude of applications that can be used with or by MFPs. As used herein, the term "application" refers to a computer software program that implements one or more services. While there exists an almost unlimited number of different types of applications, one example application is a PDF-to-text program that converts electronic documents in PDF to text format. MFPs access applications via one or more networks, such as the Internet and some application providers charge for the use of their applications.

US2003/191657A discloses an automated method for allowing service subscribers to modify service subscriptions, the method comprising: receiving an order for a service package includes multiple features; in response to the order, automatically cross referencing the features in the service package with a list of one or more existing features for the subscriber to detect any overlap between the features in the service package and the one or more existing features; in response to detecting an overlap, automatically computing a subscription change request that includes only the features in the service package that do not overlap the existing features; and submitting the subscription change request for implementation by a server provider.

The invention is in the appended claims.

An approach is provided for creating and managing pricing models and subscriptions for packages. As used herein, the term "package" refers to a logical entity that has one or more member applications, where each of the member applications provides one or more services. One or more pricing models may be assigned to a package and made available to subscribers and the pricing models assigned to a package may be changed. Users may subscribe to one or more packages and incur charges based upon the pricing models assigned to the packages to which the users subscribe. Embodiments include providing a graphical user interface for service providers to create and manage packages, define pricing models and to manage pricing model assignments for packages. Embodiments also include providing a graphical user interface for subscribers to view available applications and packages in a "marketplace" and to subscribe to packages and manage their subscriptions. Embodiments also include allowing user ratings of packages and subscription arbitration to resolve subscription conflicts.

### BRIEF DESCRIPTION OF THE DRAWINGS

In the drawings:
FIG. 1 is a block diagram that depicts an example architecture for creating and managing pricing models and subscriptions for packages.
FIG. 2 depicts example logical relationships between applications and packages.
FIG. 3 depicts an example implementation of package management system.
FIG. 4 depicts an example implementation of package data.
FIG. 5 depicts an application view within the package builder graphical user interface that allows a user, such as an application/service provider, to view a list of available applications in the package management system.
FIG. 6 depicts a package view within the package builder that allows a user, such as an application/service provider, to view a list of available packages.
FIG. 7 depicts a package editor of the package builder.
FIG. 8A depicts a pricing model editor provided by package builder that allows users to edit existing pricing models assigned to a package.
FIG. 8B depicts the how the pricing model editor is used to define a new pricing model.
FIG. 9 depicts a subscription manager of the package builder.
FIG. 10 depicts an application view within a marketplace that allows a user, such as a subscriber, to view a list of available packages.
FIG. 11 depicts package details for a package within the marketplace.
FIG. 12 depicts member applications for a package within the marketplace.
FIG. 13 depicts an application view within a marketplace that allows a user, such as a subscriber, to view a list of available applications.
FIG. 14 depicts subscribed packages in the marketplace.
FIG. 15 depicts subscribed applications in the marketplace.
FIG. 16 depicts device registration within the marketplace.
FIG. 17A depicts a flow diagram of an approach for identifying and resolving potential subscription conflicts for applications.
FIG. 17B depicts a flow diagram of an approach for identifying and resolving potential subscription conflicts for packages.

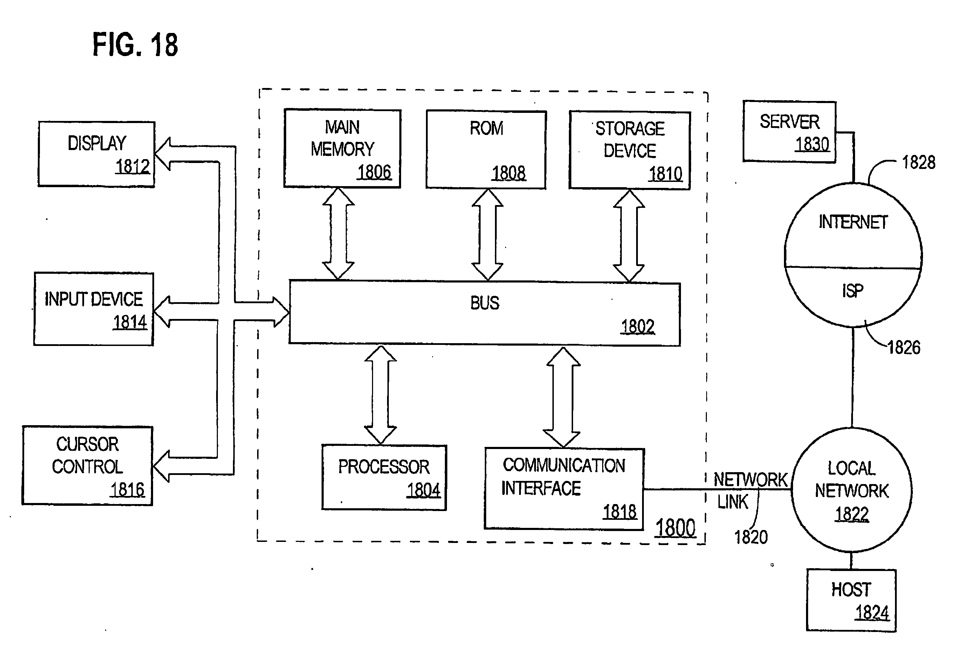

FIG. 18 is a block diagram that depicts an example computer system upon which embodiments may be implemented.

### DETAILED DESCRIPTION

In the following description, for the purposes of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.
I. OVERVIEW
II. PACKAGE ARCHITECTURE
III. PACKAGES AND PRICING MODELS
IV. PACKAGE MANAGEMENT SYSTEM
V. CREATING AND MANAGING PACKAGES
VI. SUBSCRIBING TO PACKAGES
VII. SUBSCRIPTION CONFLICTS
VIII. IMPLEMENTATION MECHANISMS

### I. OVERVIEW

An approach is provided for creating and managing pricing models and subscriptions for packages. As used herein, the term "package" refers to a logical entity that has one or more member applications, where each of the member applications provides one or more services. One or more pricing models may be assigned to a package and made available to subscribers and the pricing models assigned to a package may be changed. Users may subscribe to one or more packages and incur charges based upon the pricing models assigned to the packages to which the users subscribe. Embodiments include providing a graphical user interface for service providers to create and manage packages, define pricing models and to manage pricing model assignments for packages. Embodiments also include providing a graphical user interface for subscribers to view available applications and packages in a "marketplace" and to subscribe to packages and manage their subscriptions. Embodiments also include allowing user ratings of packages and subscription arbitration to resolve subscription conflicts.

### II. PACKAGE ARCHITECTURE

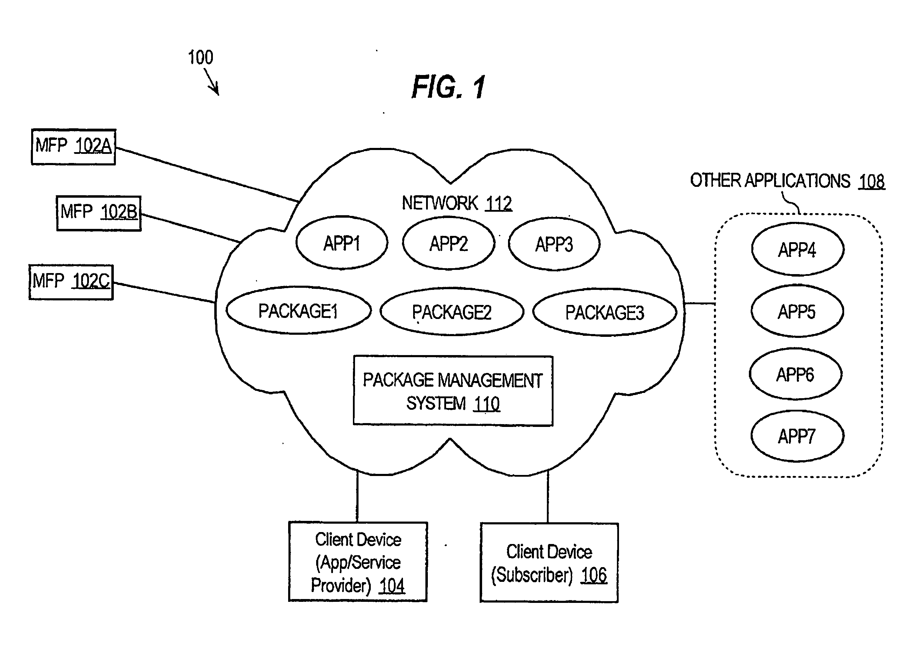

FIG. 1 is a block diagram that depicts an example architecture 100 for creating and managing pricing models and subscriptions for packages. Architecture 100 includes MFPs 102A-C, client devices 104, 106, other applications 108 and a package management system 110 communicatively coupled via a network 112. Network 112 may be implemented by any medium or mechanism that provides for the exchange of data between the elements of FIG. 1. Examples of such links include, without limitation, a network such as a Local Area Network (LAN), Wide Area Network (WAN), Ethernet or the Internet, or one or more terrestrial, satellite or wireless links. The foregoing elements of FIG. 1 may also have direct communications links that are not depicted in FIG. 1 for purposes of explanation.

MFPs 102A-C may include any type of functionality that may vary depending upon a particular implementation. MFPs 102A-C may include a user interface that allows for information to be displayed to users and one or more selection mechanisms that allow users to select various functions offered by MFPs 102A-C.

Client devices 104, 106 may be any type of client device for interacting with package management system 110. Client devices 104, 106 may be stationary or mobile client devices and may include a user interface for displaying information and for allowing users to enter information. Examples of client devices 104, 106 include, without limitation, workstations, personal computers, laptop computers, personal digital assistants (PDAs), tablet computers and telephony devices such as cell phones. For purposes of explanation, client device 104 is described hereinafter as being used by an application or service provider to create and manage packages using package management system 110 and client device 106 is described hereinafter as being used by a subscriber to subscribe to packages using package management system 110.

Architecture 100 includes applications identified in FIG. 1 by APP1, APP2 and APP3 that implement one or more services. Other applications 108 include applications identified in FIG. 1 by APP4, APP5, APP6 and APP7 that implement one or more services. Package management system 110 provides various functionality for creating and managing packages, assigning pricing models to packages and for managing subscriptions to packages, as described in more detail hereinafter. Architecture 100 includes three example packages identified in FIG. 1 as PACKAGE1, PACKAGE2 and PACKAGE 3.

### III. PACKAGES AND PRICING MODELS

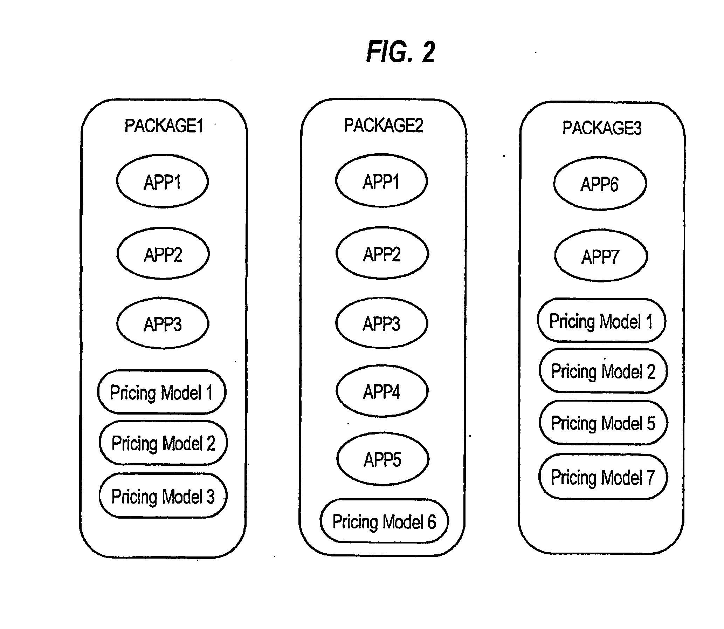

As previously described herein, the term "package" refers to a logical entity that has one or more member applications and provides the services provided by the one or more member applications. Packages may have any number of member applications and the number of applications assigned to a package may be changed. For example, applications may be removed from a package and applications may be added to a package. A particular package may have as members applications that are members of only that particular package. Alternatively, a particular package may have as members applications that are also members of other packages. For example, FIG. 2 depicts example logical relationships between applications and packages. FIG. 2 depicts three example packages identified as PACKAGE1, PACKAGE2 and PACKAGE3. PACKAGE1 has three member applications, APP1, APP2 and APP3. PACKAGE2 has five member applications, APP1, APP2, APP3, APP4 and APP5. Applications APP4 and APP5 are members of PACKAGE2 but are not members of PACKAGE1. PACKAGE3 has two member applications APP6 and APP7 that are not members of either PACKAGE1 or PACKAGE2. As described in more detail hereinafter, packages may also have other packages as members. This allows the creation of hierarchical package structures that may be very useful in certain situations. For example, a package may be created that has as members applications that provide basic services that are commonly used by users. For purposes of discussion, this package is referred to as the "basic package." Other packages may then be created that include as members both the basic package and one or more other applications that provide other services in addition to the services provided by the member applications of the basic package. This allows the basic package to be reused across multiple other packages.

A wide variety of pricing models may be used with packages. Example pricing models include, without limitation, subscription-based pricing models and volume-based pricing models. A subscription-based pricing model may include a fee for use of a package (and its member applications) for a specified time. The length of a specified time may be any length, e.g., seconds, minutes, hours, days, months, quarters, years, etc. Typical example subscription lengths are monthly, quarterly and annual. A subscription-based pricing model may allow unlimited use of a package during a specified time, although many variations of subscription-based pricing models may be used. For example, a particular subscription-based model may include a fee for unlimited use of a package (and its member applications) for a specified time, but only up to a specified maximum usage, i.e., a cap.

A volume-based pricing model may include a fee for actual use of a package. The usage may be tracked on a variety of different levels, depending upon a particular implementation. For example, usage may be tracked on a per package level, a per-application level for a package, a per function level or on a per unit level, e.g., an amount of data or a number of pages processed, etc. Volume-based pricing models may specify a fee that is fixed per use of a package, or a fee that is variable based upon the use of a package. For example, the fee per use of a package may decrease as the usage increases. Pricing models may also be based on both subscriptions and volume. For example, a subscription model may allow unlimited use of a package during a specified period up to a specified amount of usage. Pricing models may be applied to devices, groups of devices, users, groups of users or organizations.

As described in more detail hereinafter, a plurality of pricing models may be made available for each package and subscribers may be given a choice to select among the plurality of pricing models assigned to a package when subscribing to the packages. For example, a subscriber may be given a choice between several subscription pricing models with different durations and prices and several different volume-based pricing models. FIG. 2 also depicts logical relationships between packages and pricing models. In FIG. 2, PACKAGE1 has three associated pricing models, identified as Pricing Model1, Pricing Model2 and Pricing Model3. PACKAGE2 has one associated pricing model, identified as Pricing Model6. PACKAGE3 has four associated pricing models, identified as Pricing Model1, Pricing Model2, Pricing Model5 and Pricing Model7. Thus, packages may share the same associate pricing models, or may have different associated pricing models than other packages, depending upon a particular implementation. Pricing models may be defined by an administrator and the made available to subscribers via a graphical user interface. Subscribers may also be given the ability to define pricing models, depending upon a particular implementation.

### IV. PACKAGE MANAGEMENT SYSTEM

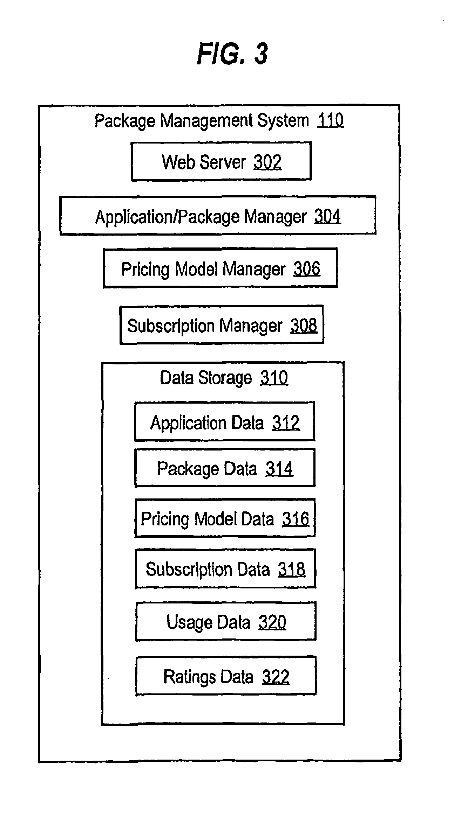

FIG. 3 depicts an example implementation of package management system 110. In this example implementation, package management system 110 includes a Web server 302, an application/package manager 304, a pricing model manager 306, a subscription manager 308 and data storage 310. Web server 302 generates Web pages which, when processed by a Web browser, provide a graphical user interface for administrators, application/service providers and subscribers to access package management system 110. Application/package manager 304 manages applications and packages, pricing model manager 306 manages pricing models and subscription manager 308 manages subscriptions to applications and packages. Web server 302, application/package manager 304, pricing model manager 306 and subscription manager 308 are depicted in FIG. 3 as described herein as separate elements and/or functions for purposes of discussion only and these elements may be combined into fewer elements, including a single element, or divided into additional separate elements, depending upon a particular implementation.

Data storage 310 may be implemented by volatile storage, non-volatile storage or any combination of volatile and non-volatile storage. In the present example, data storage 310 includes application data 312, package data 314, pricing model data 316, subscription data 318, usage data 320 and ratings data 322. Application data 312 includes information about applications available via package management system 110 and that may be included in packages. Package data 314 includes information about packages available via package management system 110. Pricing model data 316 includes information about pricing models available to administrators, application/service providers and subscribers via package management system 110. Subscription data 318 includes data that specifies subscriptions to applications and packages. Subscription data 318 may include data that identifies subscribers, the applications and packages to which those subscribers are subscribed, pricing models associated with the subscriptions and data that identifies devices to which the subscriptions apply. For example, subscription data 318 may include a subscription record that identifies that a particular user is subscribed to a particular package and a particular pricing model and that the subscription applies to particular devices. Example information about the user includes, without limitation, user identification data, information, e.g., IP addresses, logical addresses, logical names, etc., about one or more client devices associated with the user and data that identifies one or more groups or business organizations of which the user is a member. Subscriptions may be made on a per-user basis, a per-group basis, a per-business organization basis or made based upon any other type of logical entity. Usage data 320 indicates the tracked usage of applications and packages, as described in more detail hereinafter. Ratings data 322 includes data that specifies user ratings of packages, as described in more detail hereinafter.

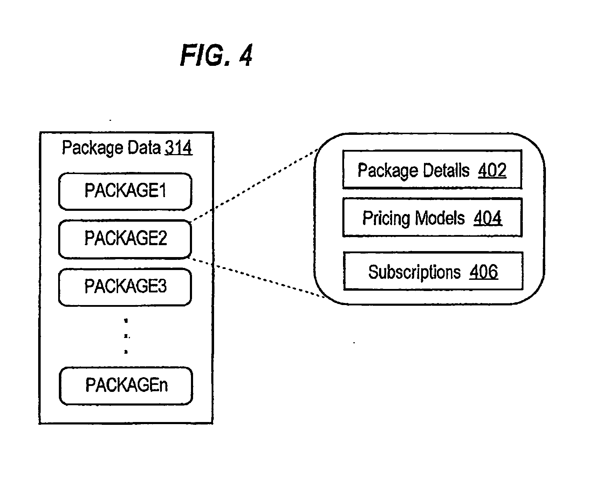

The data stored in data storage 310 is depicted in FIG. 3 and described herein as being contained within package management system 110 for purposes of explanation only and the data stored in data storage 310 may be stored separate from package management system 110, for example on a network storage or element, and accessed remotely by package management system 110. In addition, application data 312, package data 314, pricing model data 316 and subscription data 318 may be stored in any type of data format, data structure or data model, depending upon a particular implementation. Furthermore, application data 312, package data 314, pricing model data 316 and subscription data 318 are depicted in FIG. 3 and described in embodiments as separate data, but this data may be stored together or in any combination, depending upon a particular implementation. For example, FIG. 4 depicts one non-limiting example implementation of package data 314 in the form of package records, identified in FIG. 4 as PACKAGE1, PACKAGE2, PACKAGE3 through PACKAGEn. Each package record contains data that indicates package details 402, pricing models 404 and subscriptions 406. Package details 402 provide information about the package. Pricing models 404 provide information about pricing models available for the package and subscriptions 406 indicates subscriptions for the package.

### V. CREATING AND MANAGING PACKAGES

Package management system 110 is configured to provide a graphical user interface that allows users to create and manage packages. Embodiments are depicted in the figures and described herein for purposes of explanation in the context of a Web-based graphical user interface, but the invention is not limited to this context. For example, software may be installed on client devices 104, 106 to generate the graphical user interfaces. In the following Web-based examples, Web server 302 generates a plurality of Web pages that are provided to client devices 104, 106 and rendered via Web browsers executing on client devices 104, 106 that provide a package management environment referred to herein as "package builder."

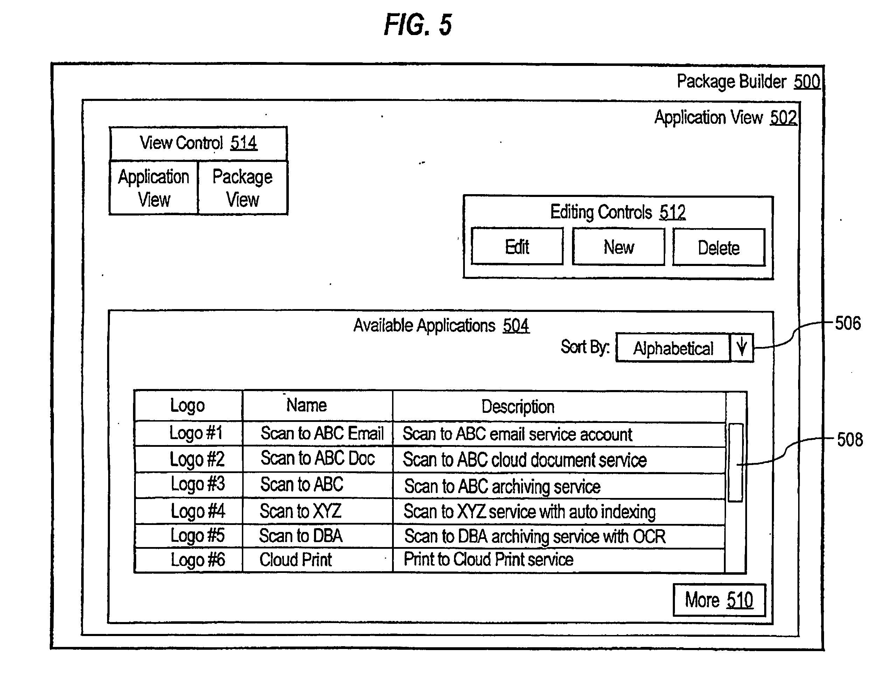

The package builder development environment allows users to perform many different functions with respect to packages. As used hereinafter, the user of the package builder may be an administrator, an application/service provider, a subscriber or any other type of user. FIG. 5 depicts an application view 502 within the package builder 500 graphical user interface that allows a user to view a list of available applications 504 in package management system 110. Access to package builder 500 may be accomplished by a user using a Web browser to access a URL associated with a start or login page of the package builder 500 and access may be controlled by requiring user authentication. Furthermore, navigation between the various features of the package builder 500 that are described herein may be accomplished using a wide variety of techniques, depending upon a particular implementation. Examples include, without limitation, windows, frames, tabs, buttons, other selectable graphical user interface objects, etc.

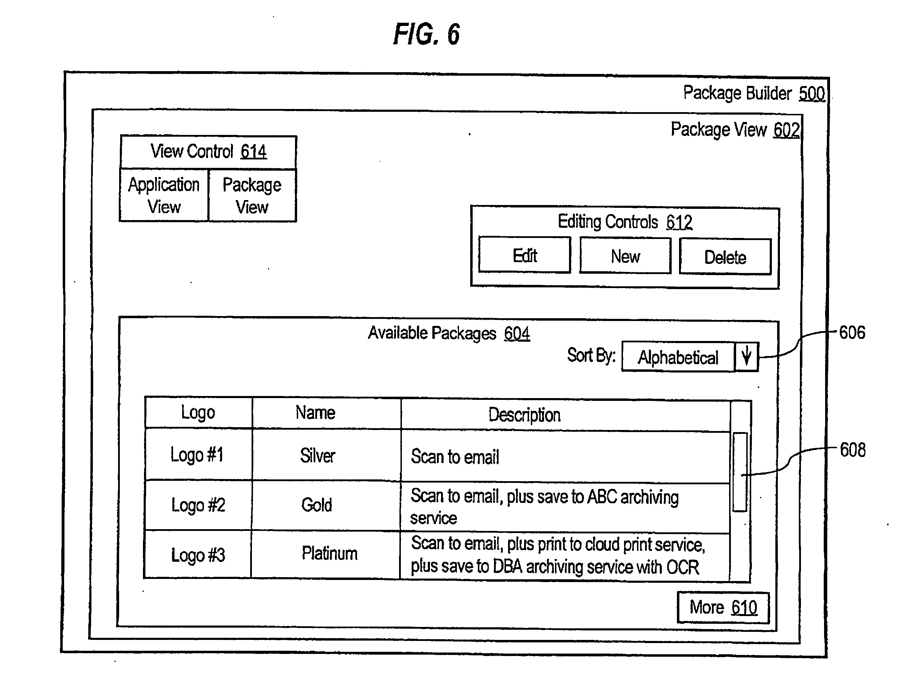

The applications represented in the list of available applications 504 may be subscribed to by subscribers and may be included in packages as described in more detail hereinafter. As depicted in FIG. 5, the list of available applications 504 includes, for each application, a logo, a name and a corresponding description of services provided by the application. FIG. 5 depicts one example embodiment of displaying a list of available applications 504 and the invention is not limited to the example depicted in FIG. 5. Less information or additional information may be provided for each application in the list of available applications 504, depending upon a particular implementation, and the invention is not limited to any particular information. In addition, any of the fields displayed in the list of available applications 504 may be active or include links to other content so that selecting a field causes additional information to be displayed. A sort control 506 allows a user to sort the applications contained in the list of available applications 504, for example, alphabetically, by date, etc., by selecting a sorting method from a pull-down list of available sorting methods. Additional controls, in the form of a slider 508 and a button 510, allow a user to view additional applications. A set of editing controls 512 allows an application/service provider to edit the information for any existing application, add a new application or delete an existing application from package management system 110. A view control 514 allows a user to change from the application view 502, as depicted in FIG. 5, to a package view 602 as depicted in FIG. 6.

FIG. 6 depicts a package view 602 within the package builder 500 that allows a user to view a list of available packages 604. The packages represented in the list of available packages 604 may be subscribed to by subscribers, as described in more detail hereinafter. As depicted in FIG. 6, the list of available packages 604 includes, for each package, a logo, a name and a corresponding description of the services provided by the package. For example, the package named "Silver" includes one or more applications that provide scan to email services. Thus, this package allows a user to scan a physical document at an MFP, which generates scan data and transmits the scan data to the application specified by the package that provides email services. The package named "Gold" provides the same services as the Silver package, but also transmits the scan data to the ABC archiving service. The archiving service may be provided by a different application than the email service. The package named "Platinum" provides the same scan to email service as both the Silver and Gold packages, but also includes a print to cloud service and a one or more services that save the scan data to the DBA archiving service and perform optical character recognition (OCR). As depicted in FIG. 6, many different packages may be offered with greatly varying services.

In addition to the information depicted in FIG. 6, other information may be provided for each package in the list of available packages 604, depending upon a particular implementation, and the invention is not limited to any particular information. Any of the fields displayed in the list of available packages 604 may be active or include links to other content so that selecting a field causes additional information to be displayed. A sort control 606 allows a user to sort the packages contained in the list of available packages 604, for example, alphabetically, by date, etc., by selecting a sorting method from a pull-down list of available sorting methods. Additional controls, in the form of a slider 608 and a button 610, allow a user to view additional packages. A set of editing controls 612 allows a user to edit the information for any existing package, add a new package or delete an existing package from package management system 110. A view control 614 allows a user to change from the package view, as depicted in FIG. 6, back to the application view 502 as depicted in FIG. 5.

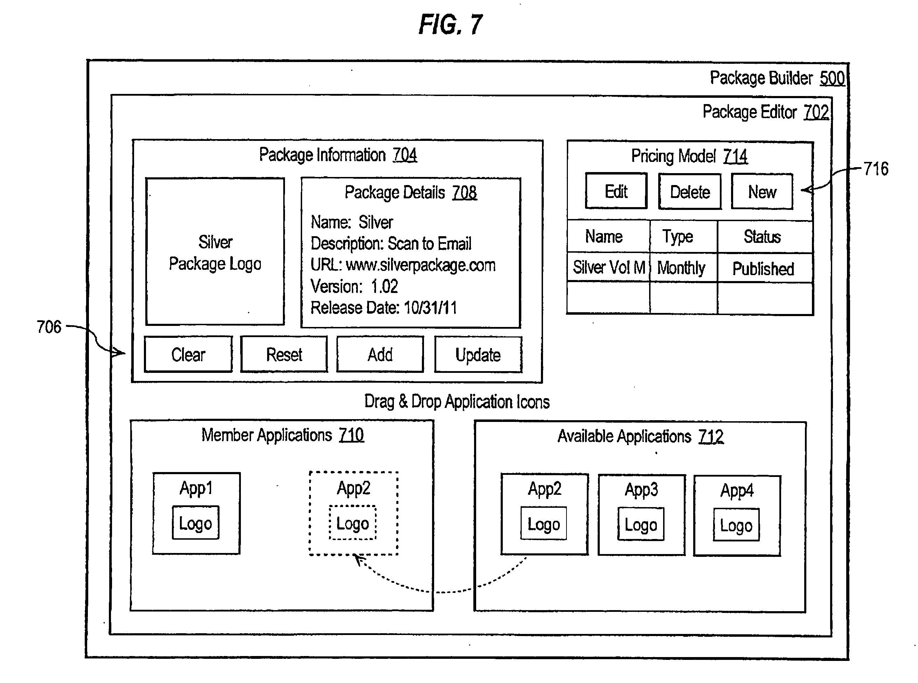

FIG. 7 depicts a package editor 702 of the package builder 700. Accessing package editor 702 may be accomplished in different ways, depending upon the architecture of a particular implementation. As one example, a user may access package editor 702 by selecting a particular package from the list of available packages 604 in FIG. 6 and then selecting the Edit button from editing controls 608. The package editor 702 allows a user to manage package information 704, for example, by using user interface controls 706 to clear, reset, add or update package details 708. In FIG. 7, the package details 708 depicted include a name, a description, a URL, a version and a release date, but the particular details may vary depending upon a particular implementation and the invention is not limited to managing any particular package details. Package information 704 may also include a logo for the package. The package editor 702 displays member applications 710 for the package and available applications 712 that may be added to the package. According to one embodiment, package editor 702 allows available applications 712 to be added to a package using "drag & drop" functionality. Drag & drop functionality may be implemented using any of a wide variety of known techniques and the invention is not limited to any particular implementation. A user may use a user interface selection device, such as a mouse, to select the icon of an available application and drag the icon into the member applications 710. As depicted in FIG. 7, a user has added application App2 to member applications 710 for the package by dragging and dropping the graphical user interface icon for App2 from available applications 712 to member applications 710. Applications in member applications 710 may be deleted from a package by selecting a member application and then selecting a delete control or by dragging the icon of the selected member application onto a "trash can" or other area associated with deleting items, As changes are made to packages using package editor 702, application/package manager 304 updates package data 314 to reflect the changes.

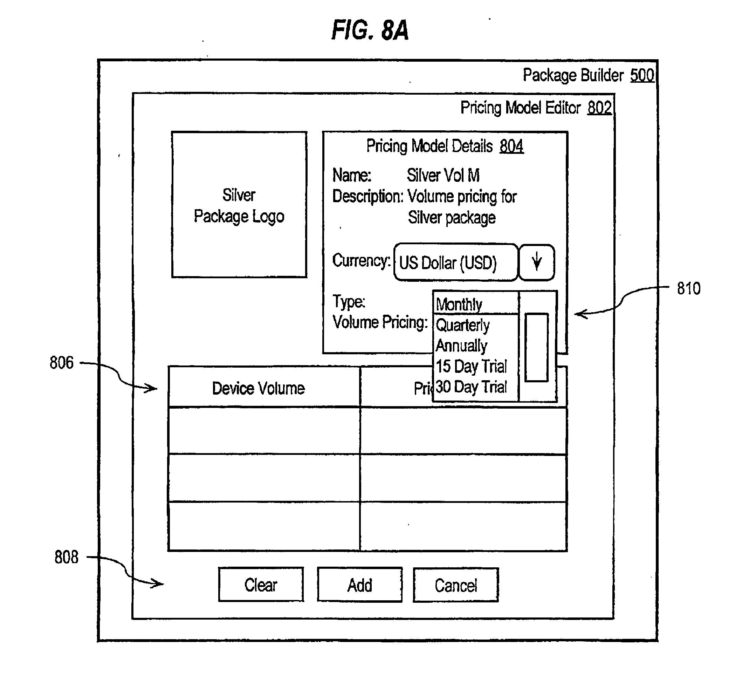

Package editor 702 also allows a user to view and manage one or more pricing models 714 for a package. Users may view the current pricing models assigned to a package, use controls 716 to edit or delete the currently-assigned pricing models, or add new pricing models to a package. FIG. 8A depicts a pricing model editor 802 provided by package builder 500 that allows users to edit existing pricing models assigned to a package. Pricing model editor 802 may display a logo for the package, which in this example is the Silver package, along with pricing model details 804. In the example depicted in FIG. 8A, the pricing model details 804 include a name, a description, a currency type, a type of pricing model and whether volume pricing is specified, but the particular details may vary depending upon a particular implementation and the invention is not limited to managing any particular package details. A user may specify additional pricing details in a table 806, which in the present example include device volume and a price per device. The details depicted in table 806 are provide for example purposes only, and additional details may be specified depending upon the particular pricing model. For example, a user may be given the capability to specify, for a subscription-based pricing model, a cost for the specified time period. The user may also be given the capability to specify a maximum usage allowed during a specified time period for a particular subscription-based pricing model. A set of controls 808 allows a user to unpublish the current pricing model, reset the field values, update the information with the revised values or cancel the editing operation. Published pricing models are pricing models that have been defined and are available for assignment to packages.

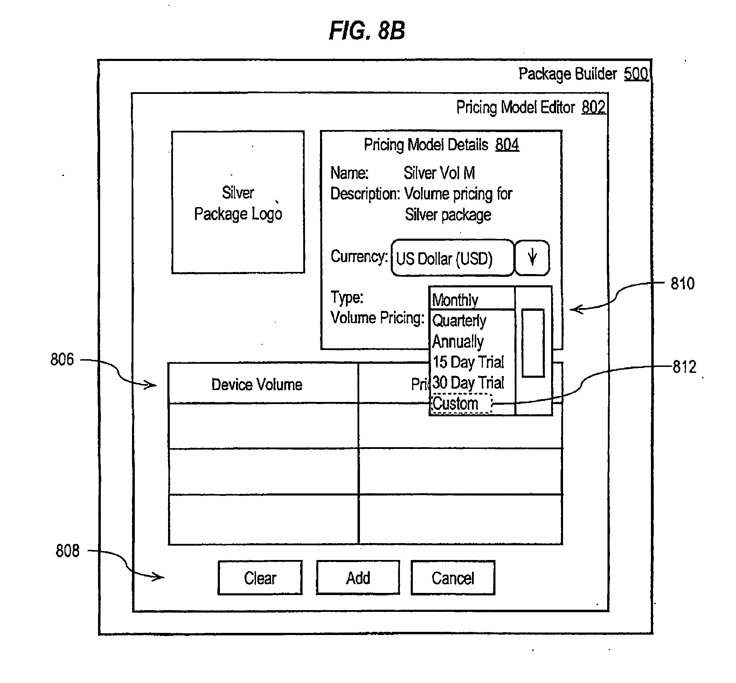

FIG. 8B depicts the how the pricing model editor 802 is used to define a new pricing model. In this example, a pull down selection control 810 is provided for selecting a type of volume pricing model, e.g., monthly, quarterly, annually, 15 day trial and 30 day trial. These are merely examples of available volume pricing models and other volume pricing models may be used, depending upon a particular implementation. The available pricing models are not limited to the predefined pricing models available through the graphical user interface, for example, via pull down selection control 810. According to one embodiment, users are given the capability to define custom pricing models for packages. For example, pull down selection control 810 includes a custom option 812 which, when selected, causes one or more graphical user interface objects, such as windows, to be displayed that provide the capability for a user to define a custom pricing model. Once defined, data that defines the custom pricing models is stored in pricing model data 316 to allow the custom pricing models to be reused.

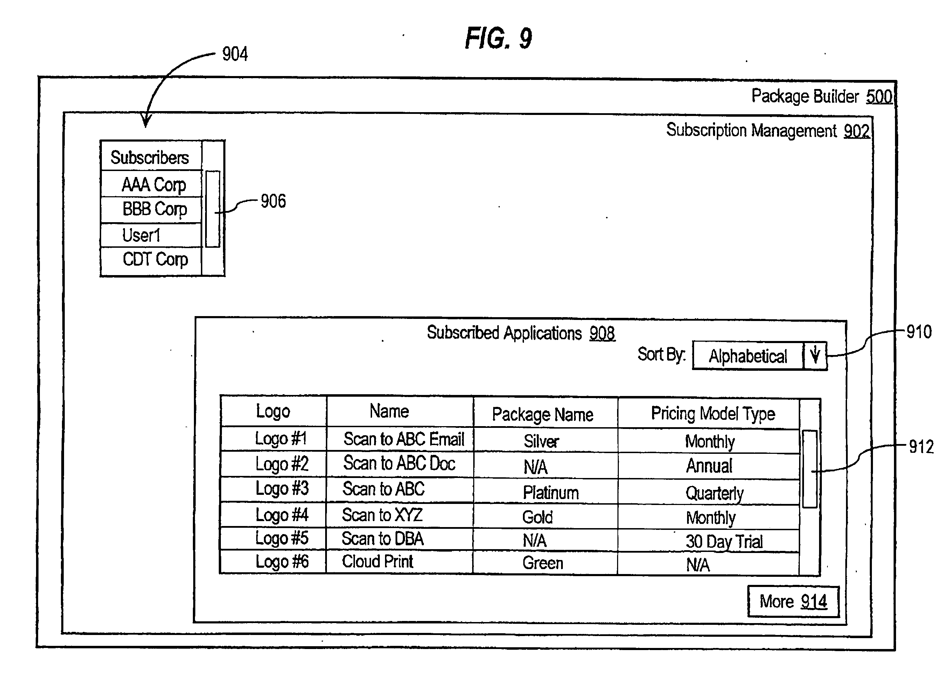

FIG. 9 depicts a subscription manager 902 of the package builder. Subscription manager 902 allows a user to view the current applications to which subscribers are currently subscribed. Subscription manager 902 includes a list of subscribers 904 with a selection mechanism, in this example in the form of a slider 906, which allows a user to view a list of current subscribers and select a particular subscriber to view the subscribed applications for that subscriber. In the present example, the list of subscribers 904 includes the names of several business organizations AAA Corp, BBB Corp and CDT Corp. The list of subscribers 904 also includes the name of an individual user User1. A list of subscribed applications 908 displays, based upon subscription data 318, a list of subscribed applications for a subscriber currently selected from the list of subscribers 904. For example, when a particular subscriber is selected from the list of subscribers 904, subscription manager 308 retrieves data for the particular subscriber from the subscription data 318. In the present example, the list of subscribers 904 displays, for each subscribed application, a logo, a name of the application, the name of a package for which the application is a member and a pricing model type assigned to the package. A sort control 910 allows a user to sort the applications contained in the list of subscribed applications 910, for example, alphabetically, by date, etc., by selecting a sorting method from a pull-down list of available sorting methods. Additional controls, in the form of a slider 912 and a button 914, allow a user to view additional applications.

### VI. SUBSCRIBING TO PACKAGES

As described in more detail hereinafter, a plurality of pricing models may be made available to users and users may be given a choice to select among the plurality of pricing models assigned to a package when subscribing to the packages. For example, a user may be given a choice between several subscription pricing models with different durations and prices and several different volume-based pricing models. Users may subscribe to packages on behalf of themselves as an individual user, on behalf of a group of users, or on behalf of a business organization or any other logical entity. Users may also subscribe to packages for one device or multiple devices. For example, a user may subscribe to a particular package with a particular pricing model for a first group of devices associated with a first business group within a business organization. The user may also subscribe to the same particular package, but with a different pricing model, for a second group of devices associated with a second business group within the same business organization. Subscription data 318 includes data that indicates the current package subscriptions and details of those subscriptions.

Package management system 110 is also configured to provide a graphical user interface that allows users to subscribe to packages. According to one embodiment, Web server 302 generates a plurality of Web pages that are provided to client devices 104, 106 and rendered via Web browsers executing on client devices 104, 106 that provide a subscriber environment referred to herein as a "marketplace."

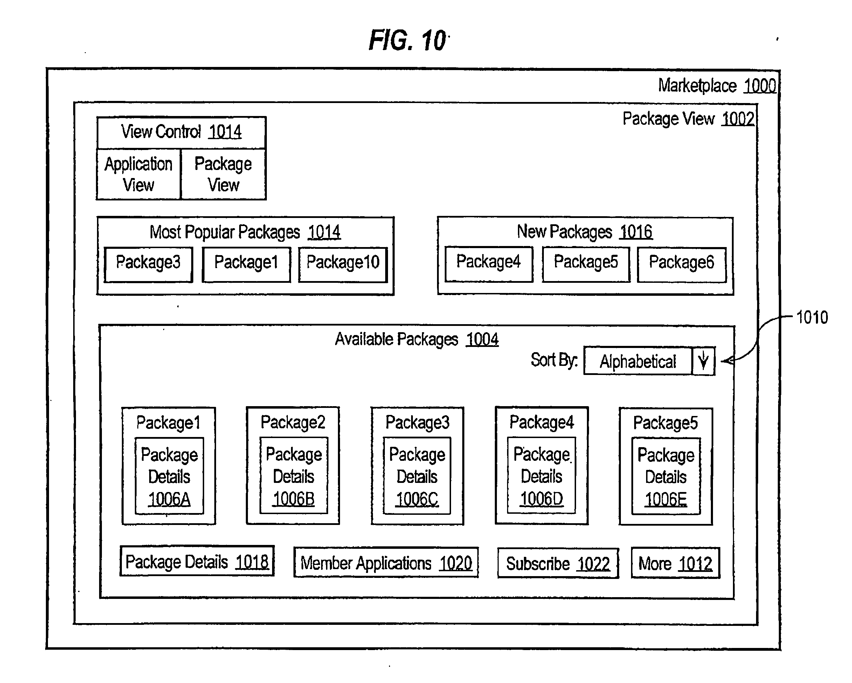

FIG. 10 depicts a package view 1002 within a marketplace 1000 that allows a user, such as a subscriber, to view a list of available packages 1004. The packages represented in the list of available packages 1004 may be subscribed to by subscribers. As depicted in FIG. 10, the list of available packages 1004 includes package details 1006A-1006E for each package Package1-Package5. The package details 1006A-1006E may include different information, depending upon a particular implementation. Example information includes, without limitation, a logo, a name, a corresponding description of the functionality provided by the package and any other attributes of the package. FIG. 10 depicts one example embodiment of displaying a list of available packages 1004 and the invention is not limited to the example depicted in FIG. 10. Less information or additional information may be provided for each package in the list of available packages 1004, depending upon a particular implementation, and the invention is not limited to any particular information. In addition, any of the graphical user interface objects displayed in the list of available packages 1004 may be active or include links to other content so that selecting an object causes additional information to be displayed.

A sort control 1010 allows a user to sort the packages contained in the list of available packages 1004, for example, by name alphabetically, by creation date, by package type, by package pricing, etc., by selecting a sorting method from a pull-down list of available sorting methods. Additional controls, in the form of a slider or a button 1012, allow a user to view additional packages. According to one embodiment, packages may also be separately identified in package view 1002. For example, most popular packages 1014 displays one or more packages that are determined to be the most popular, for example, based upon subscriber ratings. New packages 1016 displays one or more newly added packages, for example, the newest N number of packages, or packages added to the marketplace 1000 after a specified time. A view control 10 14 allows a user to change from the application view, as depicted in FIG. 10, to a package view as depicted in FIG. 6.

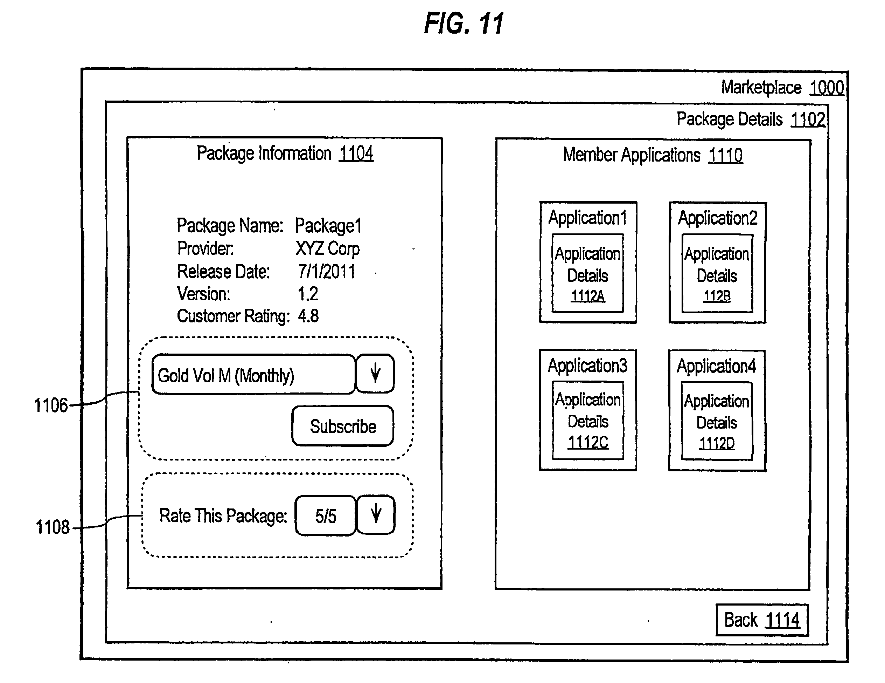

A package details control 1018, in the form of a button, allows a user to view additional information for a package, as described in more detail hereinafter. A subscribe control 1022 allows a user to subscribe to one or more packages. For example, a user may use a mouse or other user interface selection mechanism to select one or more packages displayed in package view 1002 and then select the package details control 1018 to view additional information for the selected packages, select the member applications control 1020 to view the member applications for the selected packages, or to select the subscribe control 1022 to subscribe to the selected one or more packages. A user may therefore directly subscribe to one or more packages via the package view 1002. In this situation, the subscription may include a default pricing model for the subscribed packages. Alternatively, a user may subscribe to a package via the package details 1102 screen, described in more detail hereinafter with respect to FIG. 11, and select a particular pricing model for the subscribed package. Additional information may be conveyed via package view 1002, depending upon a particular implementation. As one example, attributes of graphical user interface objects, such as color, shape, size, etc., may visually indicate that the user is currently subscribed to one or more packages represented in package view 1002. In response to a user selecting to subscribe to a package, subscription data 318 is updated to reflect the subscription and additional details, such as the pricing model associated with the subscription.

FIG. 11 depicts package details 1102 for a package within the marketplace 1000. Package details 1102 may be accessed, for example, by selecting the package details control 1018 in FIG. 10. Package details 1102 includes package information 1104 that displays information about a selected package. In the example depicted in FIG. 11, the information includes a package name, a name of a provider of the package, a release date, a version and an average customer rating. FIG. 11 depicts one example embodiment of the types of package information that may be displayed for a package and the invention is not limited to the example depicted in FIG. 11. Less information or additional information may be displayed for a package, depending upon a particular implementation. A pricing model selection control 1106 allows a user to select a pricing model and subscribe to the package with the selected pricing model. The pricing models made available to users may be defined by the user, or another user, such as a subscriber. A ratings control 1108 allows a user to rate the package, for example, by selecting a rating from a list of available ratings in a pull-down menu. In response to a user making a rating selection for the package, the package management system 110 updates the ratings data 322 to indicate the rating specified by the user for the package. The ratings data 322 may be used to determine the most popular packages displayed in the most popular packages 1014 window of FIG. 10. Any of the graphical user interface objects displayed in the list of available packages 1004 may be active or include links to other content so that selecting an object causes additional information to be displayed. According to one embodiment, the member applications 1110 for the package are displayed. In the present example, there are four member applications displayed for Package1. Application details 1112A-1112D may be displayed for the member applications 1110. A navigation control in the form of a back button 1114 may be used to return to the package view 1002 of FIG. 10.

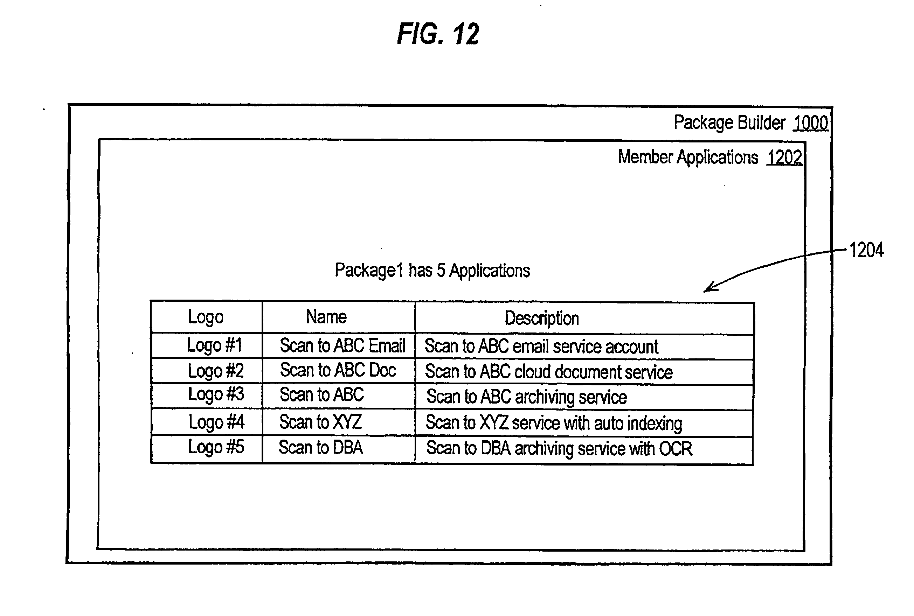

FIG. 12 depicts member applications 1202 for a package within the marketplace 1000. Member applications 1202 may be accessed, for example, by selecting the member applications control 1020 in FIG. 10. In the present example, member applications 1202 indicate that Package1 has five member applications that are listed in a table 1204. Table 1204 displays information about the member applications for a package. In the example depicted in FIG. 12, the information includes a logo, application name and a description of the application. Less information or additional information may be displayed for the member applications for a package, depending upon a particular implementation.

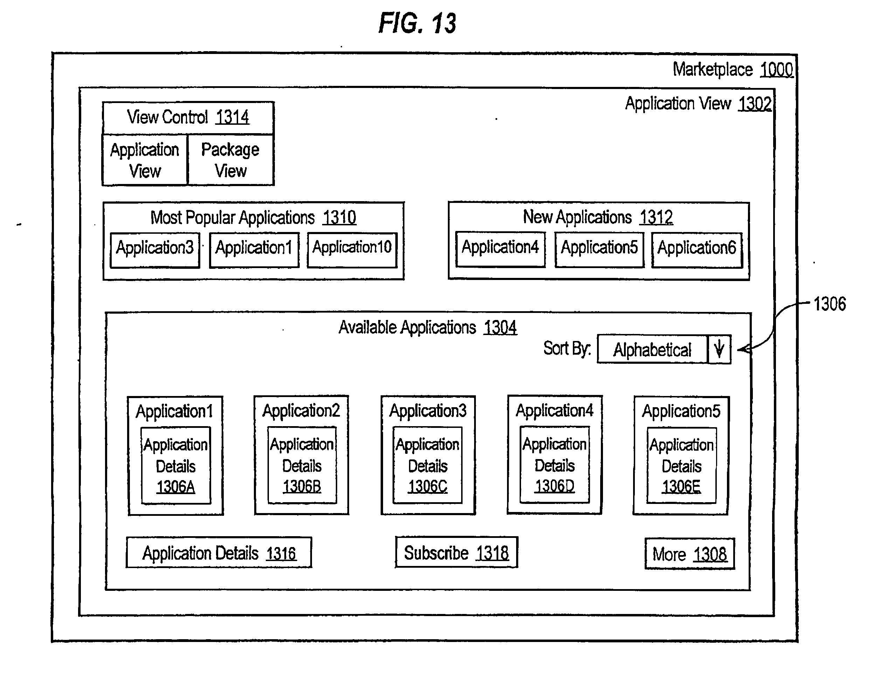

FIG. 13 depicts an application view 1302 within a marketplace 1000 that allows a user, such as a subscriber, to view a list of available applications 1304. The applications represented in the list of available applications 1304 may be subscribed to by subscribers. As depicted in FIG. 13, the list of available applications 1304 includes application details 1306A-1306E for each application Application1-Application5. The application details 1306A-1306E may include different information, depending upon a particular implementation. Example information includes, without limitation, a logo, a name, a corresponding description of the functionality provided by the application and any other attributes of the application. FIG. 13 depicts one example embodiment of displaying a list of available applications 1304 and the invention is not limited to the example depicted in FIG. 13. Less information or additional information may be provided for each application in the list of available applications 1304, depending upon a particular implementation, and the invention is not limited to any particular information. In addition, any of the graphical user interface objects displayed in the list of available applications 1304 may be active or include links to other content so that selecting an object causes additional information to be displayed.

A sort control 1306 allows a user to sort the applications contained in the list of available applications 1304, for example, alphabetically, by date, etc., by selecting a sorting method from a pull-down list of available sorting methods. Additional controls may be provided to allow a user to view additional applications, for example via control button 1308. According to one embodiment, applications may also be separately identified in application view 1302. For example, most popular applications 1310 displays one or more applications that are determined to be the most popular, for example, based upon subscriber ratings. New applications 1312 displays one or more newly added applications, for example, applications added to the marketplace 1300 within a specified time. A view control 1314 allows a user to change from the application view, as depicted in FIG. 13, to an application view as depicted in FIG. 10.

An application details control 1316, in the form of a button, allows a user to view additional information for an application. A subscribe control 1318 allows a user to subscribe to one or more applications. For example, a user may use a mouse or other user interface selection mechanism to select one or more applications displayed in application view 1302 and then select the application details control 1316 to view additional information for the selected applications or to select the subscribe control 1318 to subscribe to the selected one or more applications. Additional information may be conveyed via application view 1302, depending upon a particular implementation. As one example, attributes of graphical user interface objects, such as color, shape, size, etc., may visually indicate that the user is currently subscribed to one or more applications represented in application view 1302.

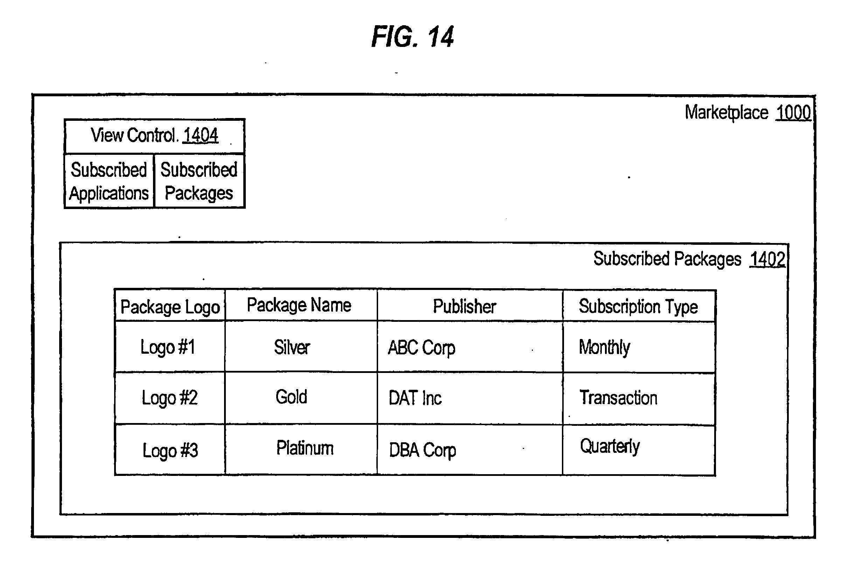

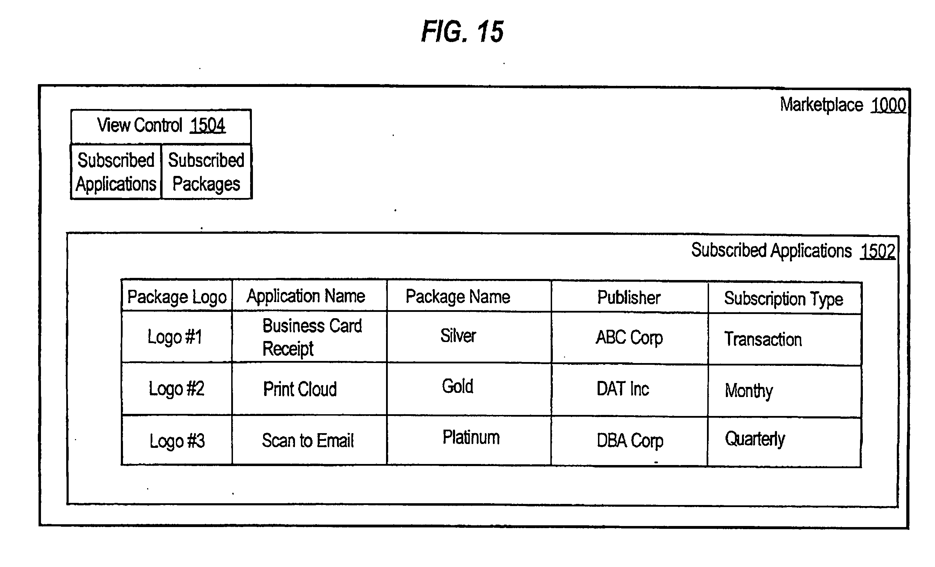

FIG. 14 depicts subscribed packages 1402 in the marketplace 1000. Subscribed packages 1402 window allows a user to view their current subscriptions. Subscribed packages 1402 includes a list of packages to which the user is currently subscribed. In the present example, a package logo, the name of the package, the publisher of the package and the subscription type are displayed for each subscribed package. Other information may be displayed depending upon a particular implementation and the invention is not limited to the information displayed in the example depicted in FIG. 14. Information for subscribed packages 1402 window may be retrieved from subscription data 318. Any of the graphical user interface objects displayed in the list of subscribed packages 1402 may be active or include links to other content so that selecting an object causes additional information to be displayed. As one non-limiting example, selecting the logo of a particular application may cause the package details 1102 screen to be displayed. A view control 1404 allows a user to switch between viewing their subscribed packages 1402 and viewing their subscribed applications, as depicted in FIG. 15 and described in more detail hereinafter.

FIG. 15 depicts subscribed applications 1502 in the marketplace 1000. Subscribed applications 1502 allows a user to view their current subscriptions. Subscribed applications 1502 includes a list of applications to which the user is currently subscribed. In the present example, an application logo, the name of the application, the name of one or more packages for which the application is a member, the publisher of the application and the subscription type are displayed for each subscribed application. Other information may be displayed depending upon a particular implementation and the invention is not limited to the information displayed in the example depicted in FIG. 15. A view control 1504 allows a user to switch between viewing their subscribed applications 1502 and viewing their subscribed packages, as depicted in FIG. 14.

According to one embodiment, packages may have as members, in addition to applications, one or more other packages. This may be useful in situations where certain services are commonly used. For example, suppose that in a particular implementation, users commonly use the following services: scan-to-email and scan-to-archive. A package may be created that includes applications that provide these services. For purposes of discussion, this package is referred to as "BasicPackage1." Additional packages may then be created that include as members, BasicPackage1 and one or more other applications. For example, suppose that a user would also like to have OCR performed on scanned documents and the OCR data stored at a particular network location. The user may create a package referred to as "BasicPackage1+" that includes as members both the BasicPackage1 and an application named "NetworkOCR1." The user may then subscribe to BasicPackage1+ with a particular pricing model. Other users may create other packages that include as members, BasicPackage1 and one or more other applications that provide one or more other services. Thus, the capability to include packages as members to other packages allows the creation of flexible hierarchical package structures.

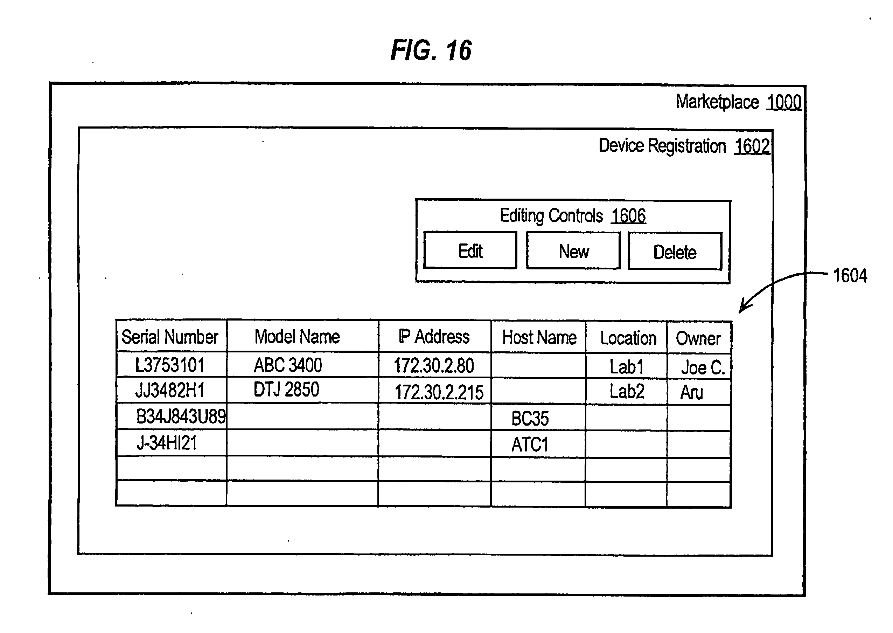

FIG. 16 depicts a device registration 1602 window within the marketplace 1000. Device registration 1602 includes a table 1604 that displays information about registered devices, to which the pricing models described herein may be applied. Each row of table 1604 corresponds to a registered device and specifies for the device a serial number, a model name, an IP address, a host name, a location and an owner. Less information or additional information may be included in table 1604, depending upon a particular implementation, and the invention is not limited to the example information depicted in FIG. 16. A set of editing controls allows a user to edit the information for a currently-registered device, add a new device, or delete (unregister) an existing device. Other controls may be provided, depending upon a particular implementation.

According to one embodiment, package management system 110 is configured to track the usage of applications and packages and generate and store usage data 320 that indicates the tracked usage of applications and packages. Usage data 320 may be used to calculate costs for using packages based upon the pricing models for those packages and the use of the packages as indicated by the usage data. Package management system 110 may also generate various usage reports, depending upon a particular implementation.

### VII. SUBSCRIPTION CONFLICTS

As described herein, users may subscribe to applications and packages. In some situations, conflicts may arise between subscriptions to applications and packages. According to one embodiment, a subscription conflict arises when a user is subscribed, or attempts to subscribe, to both an application and a package that has the same application as a member. For example, suppose that a user is currently subscribed to a particular application and the particular application is also a member of a particular package. Other applications may also belong to the particular package. Suppose further that the user requests to subscribe to the particular package while currently subscribed to the particular application. In this situation, the request creates a subscription conflict.

Subscription conflicts may be resolved by subscription manager 308 or other elements within package management system 110. The particular manner in which subscription conflicts are identified and resolved may vary, depending upon a particular implementation, and the invention is not limited to any particular manner for resolving subscription conflicts. For example, according to one embodiment, when a user requests to subscribe to a particular application, a determination is made whether the user is currently subscribed to the particular application or any packages that have the particular application as a member. This determination may be made, for example, by consulting the subscription data 318 to determine whether the user is currently subscribed to the particular application and to determine current package subscriptions for the user. The package data 314 is then consulted to determine whether the particular application is a member of any of the packages to which the user is currently subscribed. A subscription conflict exists if the user is currently subscribed to either the particular application or a package that has the particular application as a member. Subscription conflicts may also be identified when a user requests to subscribe to a package that has, as a member, one or more applications to which the user is currently subscribed.

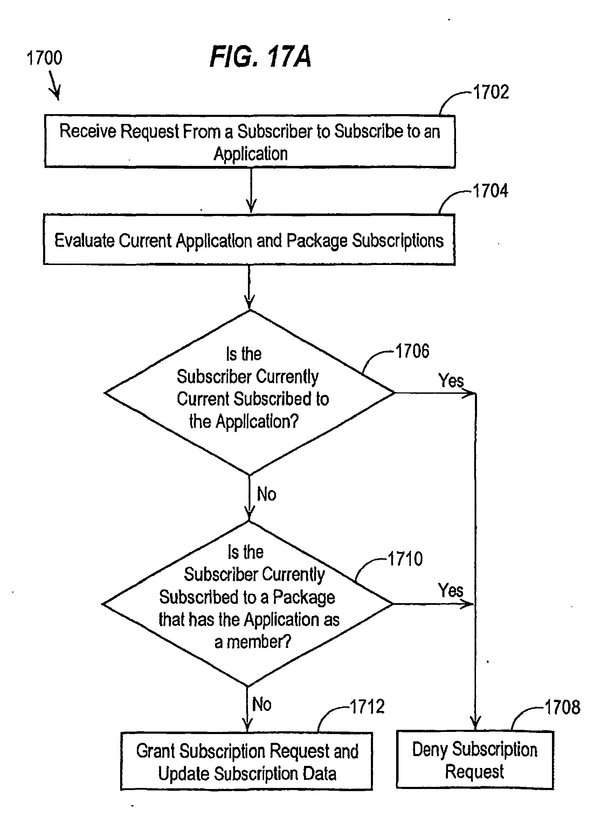

FIG. 17A depicts a flow diagram 1700 of an approach for identifying and resolving potential subscription conflicts for applications, according to one embodiment. In step 1702, a subscription request is received from a subscriber. For example, in the available applications 1304 window of FIG. 13, a user of client device 104 may select a graphical user interface object that corresponds to Application 1 and then select the subscribe 1318 user interface control. This action causes a subscription request to be generated and transmitted to package management system 110. According to one embodiment, the subscription request for an application identifies at least the user and the application to which the user would like to subscribe.

In step 1704, current application and package subscriptions are evaluated. For example, in response to receiving the subscription request, package management system 110 consults subscription data 318 to identify current application and package subscriptions for the subscriber. In step 1706, a determination is made whether the subscriber is currently subscribed to the application specified in the subscription request. For example, subscription data 318 may be consulted to identify current application subscriptions for the subscriber. If the subscriber is currently subscribed to the application, then in step 1708, the subscription request is denied. The denial of the subscription request may include a visual notification to the user that the subscription request was denied. For example, package management system 110 may cause Web server 302 to generate and provide to client device 104 one or more graphical user interface objects that provide a visual indication to the user that the user's subscription request is denied and may also provide a reason for the denial, for example, that the user is currently subscribed to the application.

If, in step 1706, the subscriber is not currently subscribed to the application, then in step 1710, a determination is made whether the subscriber is currently subscribed to a package that has the application as a member. For example, subscription data 318 may be consulted to identify current package subscriptions for the subscriber and package data 314 may be consulted to identify member applications for packages. If the subscriber is currently subscribed to a package that has, as a member, the application specified in the subscription request, then in step 1708, the subscription request is denied. The denial of the subscription request may include a visual notification to the user that the subscription request was denied as previously described, except that the stated reason for the denial may indicate that the user is currently subscribed to a package that has as a member the application specified in the subscription request. The visual notification may identify the package that has, as a member, the application specified in the subscription request. According to one embodiment, the graphical user interface objects also provide functionality to allow the user to unsubscribe from the conflicting package to allow the subscription to the requested application to be completed. For example, suppose that the user is requesting a subscription to Application 1 and the user is currently subscribed to Package1 that has Application1 as a member. The user may be allowed to unsubscribe from Package1 so that the user can subscribe to Application1.

If, in step 1710, the subscriber is not currently subscribed to a package that has, as a member, the application specified in the subscription request, then in step 1712, the subscription request is granted and subscription data 318 is updated to reflect the new subscription.

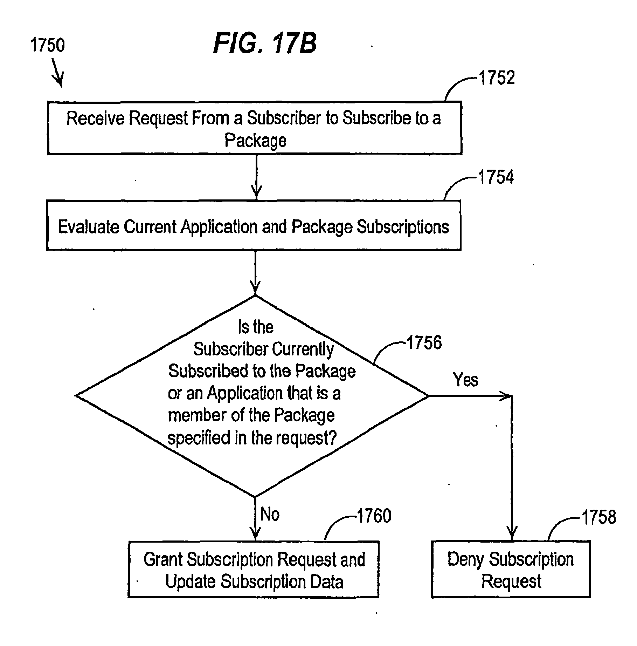

FIG. 17B depicts a flow diagram 1750 of an approach for identifying and resolving potential subscription conflicts for packages, according to one embodiment. In step 1752, a request is received from a subscriber to subscribe to a package. For example, in the available applications 1004 window of FIG. 10, a user of client device 104 may select a graphical user interface object that corresponds to Package1 and then select the subscribe 1022 user interface control. This action causes a subscription request to be generated and transmitted to package management system 110. According to one embodiment, the subscription request for a package identifies at least the user and the package to which the user would like to subscribe.

In step 1754, current application and package subscriptions are evaluated. For example, in response to receiving the subscription request, package management system 110 consults subscription data 318 to identify current application and package subscriptions for the subscriber. In step 1756, a determination is made whether the subscriber is currently subscribed to the package specified in the subscription request, or to an application that is a member of the package specified in the subscription request. For example, subscription data 318 may be consulted to identify current package and application subscriptions for the subscriber. According to one embodiment, concurrent subscriptions to an application and a package that has the application as a member represents a subscription conflict. According to one embodiment, concurrent subscriptions to two or more packages that have as a member one or more of the same applications does not represent a subscription conflict. Thus, if the subscriber is currently subscribed to the package or if the subscriber is currently subscribed to an application that is a member of the package specified in the subscription request, then in step 1758, the subscription request is denied. The denial of the subscription request may include a visual notification to the user that the subscription request was denied. For example, package management system 110 may cause Web server 302 to generate and provide to client device 104 one or more graphical user interface objects that provide a visual indication to the user that the user's subscription request is denied. The visual indication may also provide a reason for the denial, for example, that the user is currently subscribed to the package specified in the request or that the user is currently subscribed to an application that is a member of the package specified in the request. According to one embodiment, the graphical user interface objects also provide functionality to allow the user to unsubscribe from the conflicting package to allow the subscription request for the package to be granted. For example, suppose that the user is requesting a subscription to Package1 and the user is currently subscribed to Package2 that has Application1 as a member. The user may be allowed to unsubscribe from Package1 so that the user can subscribe to Application 1.

If, in step 1756, the subscriber is not currently subscribed to the package or an application that is a member of the package specified in the request, then in step 1760 the subscription request is granted and subscription data 318 is updated.

As illustrated by these examples, the identification of subscription conflicts may be made on the basis of applications or packages and subscription conflicts may be resolved based upon applications or packages, depending upon a particular implementation.

### VIII. IMPLEMENTATION MECHANISMS

Managing network device configuration data by functional area as described herein is very user friendly and less prone to errors than prior approaches. Users are informed of their progress on the GUI as each functional area of configuration data is updated and then implemented on a network device. The approach also reduces bandwidth consumption by allowing only data that has been updated to be supplied to a network device. The bulk management features simplify and expedite the editing of existing configuration data and the creation of new configuration data.

According to one embodiment, the techniques described herein are implemented by one or more special-purpose computing devices. The special-purpose computing devices may be hard-wired to perform the techniques, or may include digital electronic devices such as one or more application-specific integrated circuits (ASICs) or field programmable gate arrays (FPGAs) that are persistently programmed to perform the techniques, or may include one or more general purpose hardware processors programmed to perform the techniques pursuant to program instructions in firmware, memory, other storage, or a combination. Such special-purpose computing devices may also combine custom hard-wired logic, ASICs, or FPGAs with custom programming to accomplish the techniques. The special-purpose computing devices may be desktop computer systems, portable computer systems, handheld devices, networking devices or any other device that incorporates hard-wired and/or program logic to implement the techniques.

FIG. 17 is a block diagram that depicts an example computer system 1700 upon which embodiments may be implemented. Computer system 1700 includes a bus 1702 or other communication mechanism for communicating information, and a processor 1704 coupled with bus 1702 for processing information. Computer system 1700 also includes a main memory 1706, such as a random access memory (RAM) or other dynamic storage device, coupled to bus 1702 for storing information and instructions to be executed by processor 1704. Main memory 1706 also may be used for storing temporary variables or other intermediate information during execution of instructions to be executed by processor 1704. Computer system 1700 further includes a read only memory (ROM) 1708 or other static storage device coupled to bus 1702 for storing static information and instructions for processor 1704. A storage device 1710, such as a magnetic disk or optical disk, is provided and coupled to bus 1702 for storing information and instructions.

Computer system 1700 may be coupled via bus 1702 to a display 1712, such as a cathode ray tube (CRT), for displaying information to a computer user. An input device 1714, including alphanumeric and other keys, is coupled to bus 1702 for communicating information and command selections to processor 1704. Another type of user input device is cursor control 1716, such as a mouse, a trackball, or cursor direction keys for communicating direction information and command selections to processor 1704 and for controlling cursor movement on display 1712. This input device typically has two degrees of freedom in two axes, a first axis (e.g., x) and a second axis (e.g., y), that allows the device to specify positions in a plane.

Computer system 1700 may implement the techniques described herein using customized hard-wired logic, one or more ASICs or FPGAs, firmware and/or program logic or computer software which, in combination with the computer system, causes or programs computer system 1700 to be a special-purpose machine. According to one embodiment, those techniques are performed by computer system 1700 in response to processor 1704 executing one or more sequences of one or more instructions contained in main memory 1706. Such instructions may be read into main memory 1706 from another computer-readable medium, such as storage device 1710. Execution of the sequences of instructions contained in main memory 1706 causes processor 1704 to perform the process steps described herein. In alternative embodiments, hard-wired circuitry may be used in place of or in combination with software instructions to implement the invention. Thus, embodiments are not limited to any specific combination of hardware circuitry and software.

The term "computer-readable medium" as used herein refers to any medium that participates in providing data that causes a computer to operation in a specific manner. In an embodiment implemented using computer system 1700, various computer-readable media are involved, for example, in providing instructions to processor 1704 for execution. Such a medium may take many forms, including but not limited to, non-volatile media and volatile media. Non-volatile media includes, for example, optical or magnetic disks, such as storage device 1710. Volatile media includes dynamic memory, such as main memory 1706. Common forms of computer-readable media include, for example, a floppy disk, a flexible disk, hard disk, magnetic tape, or any other magnetic medium, a CD-ROM, any other optical medium, a RAM, a PROM, and EPROM, a FLASH-EPROM, any other memory chip or memory cartridge, or any other medium from which a computer can read.

Various forms of computer-readable media may be involved in carrying one or more sequences of one or more instructions to processor 1704 for execution. For example, the instructions may initially be carried on a magnetic disk of a remote computer. The remote computer can load the instructions into its dynamic memory and send the instructions over a telephone line using a modem. A modem local to computer system 1700 can receive the data on the telephone line and use an infra-red transmitter to convert the data to an infra-red signal. An infra-red detector can receive the data carried in the infra-red signal and appropriate circuitry can place the data on bus 1702. Bus 1702 carries the data to main memory 1706, from which processor 1704 retrieves and executes the instructions. The instructions received by main memory 1706 may optionally be stored on storage device 1710 either before or after execution by processor 1704.

Computer system 1700 also includes a communication interface 1718 coupled to bus 1702. Communication interface 1718 provides a two-way data communication coupling to a network link 1720 that is connected to a local network 1722. For example, communication interface 1718 may be an integrated services digital network (ISDN) card or a modem to provide a data communication connection to a corresponding type of telephone line. As another example, communication interface 1718 may be a local area network (LAN) card to provide a data communication connection to a compatible LAN. Wireless links may also be implemented. In any such implementation, communication interface 1718 sends and receives electrical, electromagnetic or optical signals that carry digital data streams representing various types of information.

Network link 1720 typically provides data communication through one or more networks to other data devices. For example, network link 1720 may provide a connection through local network 1722 to a host computer 1724 or to data equipment operated by an Internet Service Provider (ISP) 1726. ISP 1726 in turn provides data communication services through the world wide packet data communication network now commonly referred to as the "Internet" 1728. Local network 1722 and Internet 1728 both use electrical, electromagnetic or optical signals that carry digital data streams.

Computer system 1700 can send messages and receive data, including program code, through the network(s), network link 1720 and communication interface 1718. In the Internet example, a server 1730 might transmit a requested code for an application program through Internet 1728, ISP 1726, local network 1722 and communication interface 1718. The received code may be executed by processor 1704 as it is received, and/or stored in storage device 1710, or other non-volatile storage for later execution.

In the foregoing specification, embodiments have been described with reference to numerous specific details that may vary from implementation to implementation. Thus, the sole and exclusive indicator of what is, and is intended by the applicants to be, the invention is the set of claims that issue from this application, in the specific form in which such claims issue, including any subsequent correction. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. A computer-implemented method for managing applications, the computer-implemented method comprising:
generating and transmitting to a client device (106) first graphical user interface object data which, when processed at the client device, causes a first plurality of graphical user interface objects to be displayed at the client device, wherein the first plurality of graphical user interface objects correspond to and identify a plurality of packages and allow users to subscribe to one or more packages from the plurality of packages, wherein at least a particular package from the plurality of packages has both an associated pricing model and at least two or more member applications that implement two or more services;
receiving, from the client device, first user selection data that indicates a user selection for subscription of the particular package;
determining whether a subscription conflict exists for the user that corresponds to the user selection with respect to the particular package, including determining whether the user that corresponds to the user selection is currently subscribed to another package that has as a member any of the two or more member applications;
in response to determining that a subscription conflict exists for the user that corresponds to the user selection with respect to the particular package, generating and transmitting to the client device second graphical user interface data which, when processed at the client device, indicates that a subscription conflict exists for the user that corresponds to the user selection with respect to the particular package; and
generating and transmitting to the client device second graphical user interface object data which, when processed at the client device, causes a second plurality of graphical user interface objects to be displayed at the client device, wherein the second plurality of graphical user interface objects provide controls to allow the user to unsubscribe from the other package that has as a member any of the two or more member applications.

2. The computer-implemented method for managing applications as recited in Claim 1, wherein determining whether a subscription conflict exists for the user that corresponds to the user selection with respect to the particular package includes determining whether the user that corresponds to the user selection is currently subscribed to any of the two or more member applications.

3. The computer-implemented method for managing applications as recited in Claim 2, further comprising generating and transmitting to the client device second graphical user interface object data which, when processed at the client device, causes a second plurality of graphical user interface objects to be displayed at the client device, wherein the second plurality of graphical user interface objects provide controls to allow the user to unsubscribe from any of the two or more member applications to which the user is currently subscribed.

4. The computer-implemented method for managing applications as recited in Claim 1, further comprising generating and transmitting to an administrative client device a notification that a subscription conflict exists for the user that corresponds to the user selection with respect to the particular package.

5. The computer-implemented method for managing applications as recited in Claim 1, wherein the first graphical user interface object data is transmitted to the client device in one or more Web pages.

6. A computer-readable medium for managing applications, the computer-readable medium storing instructions which, when processed by one or more processors, cause them to perform all the steps of the method of any one of Claims 1 to 5.

7. Apparatus (110) for managing applications (108), the apparatus comprising one or more processors (302-308) and a memory storing instructions which, when processed by the one or more processors, cause them to perform all the steps of the method of any one of Claims 1 to 5.

8. A system comprising apparatus (110) according to Claim 7.

## Patentansprüche

1. Computerimplementiertes Verfahren zum Verwalten von Anwendungen, wobei das computerimplementierte Verfahren Folgendes umfasst:
einer Client-Einrichtung (106) erste GUI(graphische Benutzerschnittstelle)-Objektdaten erzeugen und senden, die, wenn sie an der Client-Einrichtung verarbeitet werden, eine erste Vielzahl von GUI-Objekten veranlassen, an der Client-Einrichtung angezeigt zu werden, worin die erste Vielzahl von GUI-Objekten einer Vielzahl von Paketen entsprechen und diese identifizieren und Benutzern ermöglichen, ein oder mehrere Pakete aus der Vielzahl von Paketen zu subskribieren, worin mindestens ein bestimmtes Paket aus der Vielzahl von Paketen sowohl ein assoziiertes Preismodell als auch mindestens zwei oder mehr Member-Anwendungen hat, die zwei oder mehr Dienste implementieren;
von der Client-Einrichtung erste Benutzerauswahldaten empfangen, die eine Benutzerauswahl für Subskription des bestimmten Pakts anzeigen;
Bestimmen, ob ein Subskriptionskonflikt für den Benutzer besteht, der der Benutzerauswahl in Bezug auf das bestimmte Paket entspricht, einschließlich der Bestimmung, ob der Benutzer, der der Benutzerauswahl entspricht, gegenwärtig ein anderes Paket subskribiert, das als ein Member eine der zwei oder mehr Member-Anwendungen hat;
als Antwort auf das Bestimmen, dass ein Subskriptionskonflikt für den Benutzer besteht, der der Benutzerauswahl in Bezug auf das bestimmte Paket entspricht, der Client-Einrichtung zweite GUI-Daten erzeugen und senden, die, wenn sie an der Client-Einrichtung verarbeitet werden, anzeigen, dass ein Subskriptionskonflikt für den Benutzer besteht, der der Benutzerauswahl in Bezug auf das bestimmte Paket entspricht; und
der Client-Einrichtung zweite GUI(graphische Benutzerschnittstelle)-Objektdaten erzeugen und senden, die, wenn sie an der Client-Einrichtung verarbeitet werden, eine zweite Vielzahl von GUI-Objekten veranlassen, an der Client-Einrichtung angezeigt zu werden, worin die zweite Vielzahl von GUI-Objekten Steuerungen bereitstellen, um dem Benutzer zu ermöglichen, das andere Paket zu entsubskribieren, das als ein Member eine der zwei oder mehr Member-Anwendungen hat.

2. Computerimplementiertes Verfahren zum Verwalten von Anwendungen nach Anspruch 1, worin das Bestimmen, ob ein Subskriptionskonflikt für den Benutzer besteht, der der Benutzerauswahl in Bezug auf das bestimmte Paket entspricht, das Bestimmen einschließt, ob der Benutzer, der der Benutzerauswahl entspricht, gegenwärtig eine der zwei oder mehr Member-Anwendungen subskribiert.

3. Computerimplementiertes Verfahren zum Verwalten von Anwendungen nach Anspruch 2, außerdem umfassend, dass der Client-Einrichtung zweite GUI-Objektdaten erzeugt und gesendet werden, die, wenn sie an der Client-Einrichtung ausgeführt werden, bewirken, dass eine zweite Vielzahl von GUI-Objekten an der Client-Einrichtung angezeigt werden, worin die zweite Vielzahl von GUI-Objekten Steuerungen bereitstellen, um dem Benutzer zu ermöglichen, eine der zwei oder mehr Member-Anwendungen zu entsubskribieren, die der Benutzer gegenwärtig subskribiert.

4. Computerimplementiertes Verfahren zum Verwalten von Anwendungen nach Anspruch 1, außerdem umfassend, dass der administrativen Client-Einrichtung eine Meldung erzeugt und gesendet wird, dass ein Subskriptionskonflikt für den Benutzer besteht, der der Benutzerauswahl in Bezug auf das bestimmte Paket entspricht.

5. Computerimplementiertes Verfahren zum Verwalten von Anwendungen nach Anspruch 1, worin die ersten GUI-Objektdaten an die Client-Einrichtung in einer oder mehreren Webseiten übertragen werden.

6. Computerlesbares Medium zum Verwalten von Anwendungen, wobei das computerlesbare Medium Anweisungen speichert, die, wenn sie von einem oder mehreren Prozessoren ausgeführt werden, diese veranlassen, alle Schritte des Verfahrens nach einem der Ansprüche 1 bis 5 auszuführen.

7. Vorrichtung (110) zum Verwalten von Anwendungen (108), wobei die Vorrichtung einen oder mehrere Prozessoren (302-308) und einen Anweisungen speichernden Speicher umfasst, die, wenn sie von dem einen oder den mehreren Prozessoren ausgeführt werden, diese veranlassen, alle Schritte des Verfahrens nach einem der Ansprüche 1 bis 5 auszuführen.

8. System, das eine Vorrichtung (110) nach Anspruch 7 umfasst.

## Revendications

1. Procédé mis en oeuvre par ordinateur pour gérer des applications, le procédé mis en place dans un ordinateur comprenant les étapes consistant à :
générer et transmettre à un dispositif client (106) des premières données d'objet d'interface utilisateur graphique qui, lorsqu'elles sont traitées au niveau du dispositif client, entraînent l'affichage d'une première pluralité d'objets d'interface utilisateur graphique au niveau du dispositif client, dans lequel la première pluralité d'objets d'interface utilisateur graphique correspondent à et identifient une pluralité de forfaits et permettent à des utilisateurs de s'inscrire à un ou plusieurs forfaits parmi la pluralité de forfaits, dans lequel au moins un forfait particulier parmi la pluralité de forfaits présente un modèle de tarification associé et au moins deux ou plus de deux applications membre qui mettent en oeuvre deux ou plus de deux services ;
recevoir, depuis le dispositif client, des premières données de sélection d'utilisateur qui indiquent une sélection d'utilisateur pour une inscription audit forfait particulier ;
déterminer s'il existe un conflit d'inscription pour l'utilisateur qui correspond à la sélection d'utilisateur en ce qui concerne ledit forfait particulier, y compris déterminer si l'utilisateur qui correspond à la sélection d'utilisateur est actuellement inscrit à un autre forfait qui présente en tant que membre l'un quelconque parmi lesdits deux ou plus de deux applications membre ;
en réaction à l'étape consistant à déterminer qu'un conflit d'inscription existe pour l'utilisateur qui correspond à la sélection d'utilisateur en ce qui concerne le forfait particulier, générer et transmettre au dispositif client des secondes données d'interface utilisateur graphique qui, lorsqu'elles sont traitées au niveau du dispositif client, indiquent qu'un conflit d'inscription existe pour l'utilisateur qui correspond à la sélection d'utilisateur en ce qui concerne le forfait particulier ; et
générer et transmettre au dispositif client des secondes données d'objet d'interface utilisateur graphique qui, lorsqu'elles sont traitées au niveau du dispositif client, entraîne l'affichage d'une seconde pluralité d'objets d'interface utilisateur graphique au niveau du dispositif client, dans lequel la seconde pluralité d'objets d'interface utilisateur graphique fournissent des commandes pour permettre à l'utilisateur de se désinscrire de l'autre forfait qui présente en tant que membre l'une quelconque desdits deux ou plus de deux applications membre.

2. Procédé mis en oeuvre par ordinateur pour gérer des applications, selon la revendication 1, dans lequel l'étape consistant à déterminer s'il existe un conflit d'inscription pour l'utilisateur qui correspond à la sélection d'utilisateur en ce qui concerne le forfait particulier inclut une étape consistant à déterminer si l'utilisateur qui correspond à la sélection d'utilisateur est actuellement inscrit l'une quelconque parmi les deux ou plus de deux applications membre.

3. Procédé mis en oeuvre par ordinateur pour gérer des applications, selon la revendication 2, comprenant en outre une étape consistant à générer et transmettre au dispositif client des secondes données d'objet d'interface utilisateur graphique qui, lorsqu'elles sont traitées au niveau du dispositif client, entraînent un affichage d'une seconde pluralité d'objets d'interface utilisateur graphique au niveau du dispositif client, dans lequel la seconde pluralité d'objets d'interface utilisateur graphique fournissent des commandes pour permettre à l'utilisateur de se désinscrire de l'une quelconque parmi les deux ou plus de deux applications membre auxquelles l'utilisateur est actuellement inscrit.

4. Procédé mis en oeuvre par ordinateur pour gérer des applications, selon la revendication 1, comprenant en outre une étape consistant à générer et transmettre à un dispositif client administratif une notification qu'un conflit d'inscription existe pour l'utilisateur qui correspond à la sélection d'utilisateur en ce qui concerne le forfait particulier.

5. Procédé mis en oeuvre par ordinateur pour gérer des applications, selon la revendication 1, dans lequel les premières données d'objet d'interface utilisateur graphique sont transmises au dispositif client dans une ou plusieurs pages web.

6. Support qui peut être lu par un ordinateur pour gérer des applications, le support qui peut être lu par un ordinateur stockant des instructions qui, lorsqu'elles sont traitées par un ou plusieurs processeurs, amènent ledit ou lesdits processeur(s) à mettre en oeuvre toutes les étapes du procédé selon l'une quelconque des revendications 1 à 5.

7. Appareil (110) pour gérer des applications (108), l'appareil comprenant un ou plusieurs processeurs (302-308) et une mémoire stockant des instructions qui, lorsqu'elles sont traitées par le un ou les plusieurs processeurs, amènent ledit ou lesdits processeur(s) à mettre en oeuvre toutes les étapes du procédé selon l'une quelconque des revendications 1 à 5.

8. Système comprenant un appareil (110) selon la revendication 7.
